# EUROPEAN PATENT APPLICATION

(11) **EP 1 731 774 A1**
(43) Date of publication of application: **13.12.2006**
(21) Application number: 06112320.4
(22) Date of filing: 06.04.2006
(51) Int. Cl.: F16B 23/00, B25B 15/00

(54) **Screw, punch and screw driver**

(30) Priority: 10.05.2005 CN 200510069099
(71) Applicant: Lin, Chao Wei, 71848 Taiwan (TW)
(72) Inventor: Lin, Chao Wei, 71848 Taiwan (TW)
(74) Representative: Kirschner, Klaus Dieter

(57) **Abstract**

The present invention generally relates to screw, punch and screw driver bit and more particularly to the improvement of a drive recess of a screw head or a bolt head, a bit portion of a punch for forging the screw, and a drive bit of a screw driver bit for matching therewith. The drive recess (4) of the screw head includes four symmetrical arc-shaped grooves (40) and a square groove (41) formed at the center of the arc-shaped grooves. Also, the bit portion of the punch is used for forging the screw and the drive bit of the screw driver bit is used for matching with the screw, and the punch and the screw driver bit correspondingly include four symmetrical arc-shaped protrusions and a square protrusion formed at the center of the arc-shaped protrusions. Thus, the types of slot, cross, cross-square combination, square and double-cross of the drive bit of the conventional screw driver bit, and the screw driver bit of the present invention all can be adapted to insert into and engage with the drive recess of the present invention. Particularly, when the screw driver bit having arc-shaped drive bit is simultaneously used, it is easy to control the screw during locking and to generate larger driving torque, thereby achieving the object of practical utility and economizing effort.

## Description

The present invention generally relates to a screw, a punch and a screw driver bit, and more particularly to a screw, a punch for forming a drive recess of a screw head, and a screw driver bit for matching therewith, thereby generating larger driving torque.

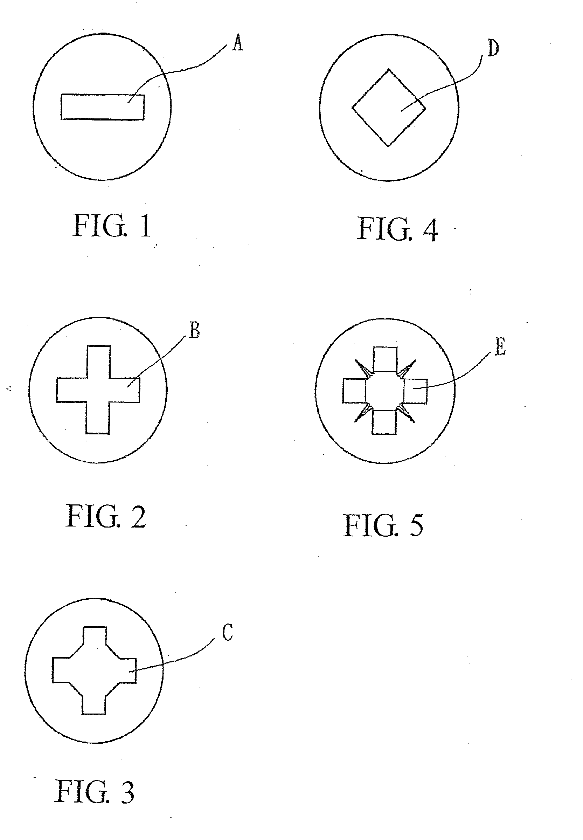

Currently, conventional screws or bolts include many types of head, such as pan head, conical head, annular head, countersink head, oval head, truss head, etc., which can be adapted to drive recesses such as slot drive recess (A), cross (Phillips) drive recess (B), cross-square combination drive recess (C), square drive recess (D) and double-cross (Pozi) drive recess (E) as respectively shown in FIGS. 1, 2, 3, 4 and 5. However, hand tools which match with the above-mentioned drive recesses (A), (B), (C), (D) and (E) includes a screw driver bit having drive bits which are limited to only the types of slot, cross, cross-square combination, square and double-cross, etc. Thus, the application of the screw driver bits is restricted, such that currently other screw driver bits cannot insert into the above-mentioned drive recesses, and the screw cannot generate larger diving torque.

Furthermore, according to the requirement of engagement between the drive recess and the screw driver bit, the screw driver bit must engage with the drive recess quickly, and simultaneously the loose engagement (the drive bit wobbles excessively within the drive recess) shouldn't be large after the screw driver bit is engaged with the drive recess. If the loose engagement is large, the drive recess and the drive bit of the screw driver bit will be damaged when a power-driven tool suddenly turns to generate large torque, because the engagement between the drive recess and the screw driver bit is not tight, such that the loose engagement is large and then the drive bit slips out of the drive recess.

Accordingly, in order to solve the above-mentioned problem and to improve above-mentioned screw, mold and screw driver bit, Taiwan Patent Publication Number 382306, entitled "Screw, Mold and Screw Driver Bit" and commonly assigned to the assignee of the present application, discloses a drive recess of screw head including four symmetrical fan-shaped grooves and a square groove formed at the center of the fan-shaped grooves. A bit portion of a mold for forging the screw and a drive bit of a screw driver bit for matching with the screw, correspondingly include four symmetrical fan-shaped protrusions and a square protrusion formed at the center of the fan-shaped protrusions. However, it is not easy to form four fan-shaped grooves, but is easy to damage the mold so as to substantially increase the cost.

Accordingly, there still exists a need for a screw, a punch and a screw driver bit capable of solving the above-mentioned problem.

This object is solved by the screw, the punch and the screw driver bit of the independnat clams. Preferred embodiments iof the invention are given in the sub-claims.

In order to tightly engage a screw driver bit with a drive recess, fan-shaped grooves of the drive recess of the screw head can be replaced with arc-shaped grooves. Also, if the angle between arc-shaped protrusions and square protrusion of the screw driver bit is small and the arc-shaped protrusions and square protrusion of the screw is nearly parallel to central line of the screw, the loose engagement (the drive bit wobbles excessively within the drive recess) can be substantially decreased and the driving torque can be comparatively increased, when compared with Taiwan Patent Publication Number 382306. Furthermore, preferably, the arc-shaped groove can have an arc span which is at least more than a half circle. Thus, the drive recess of the screw head of the present invention includes four symmetrical arc-shaped grooves and a square groove formed at the center of the arc-shaped grooves, wherein preferably the arc-shaped groove can have an arc span which is at least more than a half circle. A bit portion of a punch (mold) for forging the screw and a drive bit of a screw driver bit for matching with the screw, correspondingly include four symmetrical arc-shaped protrusions and a square protrusion formed at the center of the arc-shaped protrusions.

Accordingly, it is an advantage of the present invention to provide a drive recess of head of screws or bolts not only applied to a variety of types of drive bit of the screw driver bit and but also matched with the structure of the screw driver bit of a hand tool result therefrom, whereby the screw can generate larger diving torque of engagement, and the drive bit of the screw driver bit can much tightly engage with the drive recess, because the drive recess includes four symmetrical arc-shaped grooves and a square groove formed at the center of the arc-shaped grooves.

It is another advantage of the present invention to provide a punch of a screw forging device resulted from the drive recess of the screw for forging the screw head, wherein a bit portion of the punch is corresponding to the drive recess of the screw head and includes four symmetrical arc-shaped protrusions and a square protrusion formed at the center of the arc-shaped protrusions.

It is a further advantage of the present invention to provide a structure of a screw driver bit of a hand tool resulted from the drive recess of the screw, wherein a drive bit of the screw driver bit is corresponding to the drive recess of the screw head and includes four symmetrical arc-shaped protrusions and a square protrusion formed at the center of the arc-shaped protrusions.

The foregoing, as well as additional objects, features and advantages of the invention will be more readily apparent from the following detailed description, which proceeds with reference to the accompanying drawings.
FIG. 1 is a top view of a slot drive recess of a first conventional screw;
FIG. 2 is a top view of a cross drive recess of a second conventional screw;
FIG. 3 is a top view of a cross-square drive recess of a third conventional screw;
FIG. 4 is a top view of a square drive recess of a fourth conventional screw;
FIG. 5 is a top view of a double-cross drive recess of a fifth conventional screw;
FIG. 6 is a top view of a screw according to an embodiment of the present invention;
FIG. 7 is a cross-sectional view along A-A' line of FIG. 6;
FIG. 8 is a partial perspective view of a screw of the present invention;
FIG. 9 is a side elevational view of a screw of the present invention;
FIG. 10 is a side elevational view of a punch according to an embodiment of the present invention;
FIG. 11 is a side elevational view of a screw driver bit according to an embodiment of the present invention; and
FIG. 12 is a cross-sectional view along B-B' line of FIG. 11.

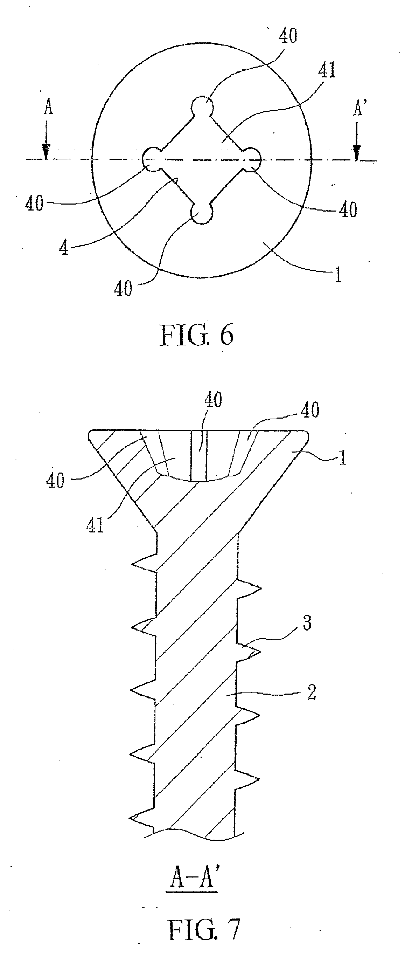

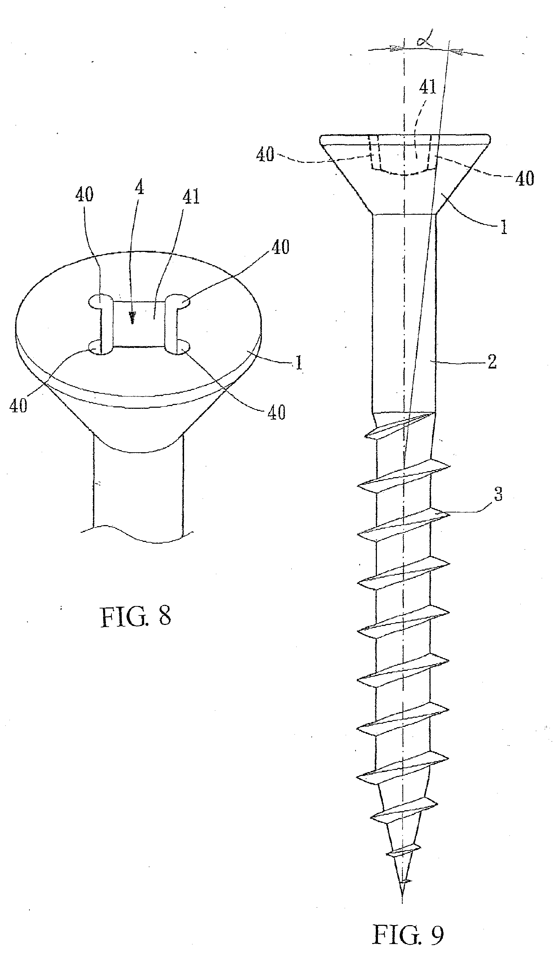

Referring to FIGS. 6 and 7, they depict a screw according to an embodiment of the present invention. The screw includes a screw head 1, a shank 2 and a male-thread 3. The screw head 1 can be pan head, conical head, circular head, annular head, countersink head, oval head, truss head, etc. The screw head 1 is provided with a drive recess 4, wherein the drive recess 4 includes four symmetrical arc-shaped grooves 40 and a square groove 41 formed at the center of the arc-shaped grooves 40, in order to match with a wide variety of shapes of drive bit of screw driver bit. Also, the arc-shaped groove 40 can be a part of circle-shaped groove or oval-shaped groove. The arc-shaped groove 40 can have an arc span which is at least more than a half circle (e.g. the arc span is three-fourth of circle, shown in FIGS. 6 and 8). Furthermore, an included angle αbetween groove wall of the arc-shaped groove 40 and central line of the screw is between 0 and 45 degrees, shown in FIG. 9. Likewise, an included angle αbetween groove wall of the square groove 41 and central line of the screw is between 0 and 45 degrees.

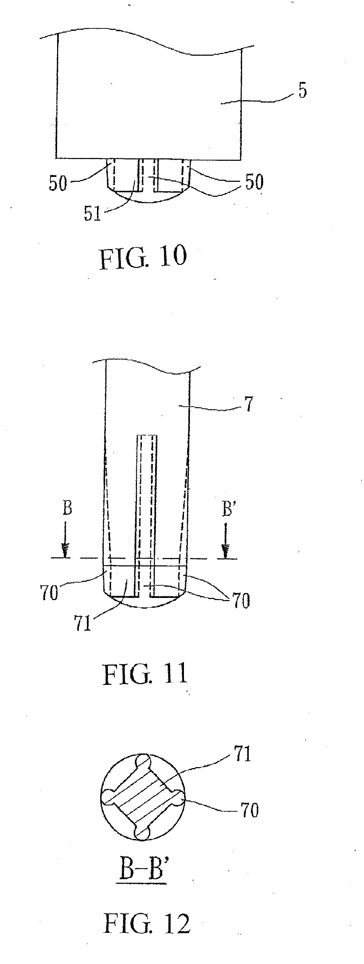

Referring to FIG. 10, it depicts a punch 5 according to an embodiment of the present invention. The punch 5 can be a male-punch of a forging device for forming the drive recess 4 of the screw head 1 of the present invention. A bit portion of the punch 5 is corresponding to the drive recess 4 of the screw head 1 and includes four symmetrical arc-shaped protrusions 50 and a square protrusion 51 formed at the center of the arc-shaped protrusions 50, thereby forging the drive recess 4 of the screw head 1.
Referring to FIGS. 11 and 12, they depict a screw driver bit 7 according to an embodiment of the present invention. The screw driver bit 7 can tightly engage with the screw of the present invention. A drive bit of the screw driver bit 7 is corresponding to the drive recess 4 of the screw head 1 and includes four symmetrical arc-shaped protrusions 70 and a square protrusion 71 formed at the center of the arc-shaped protrusions 70, thereby applying to the drive recess 4 of the screw head 1 of the screw.

Likewise, the arc-shaped protrusions 50, 70 of the punch 5 and the screw driver bit 7 can have an arc span which is at least more than a half circle (e.g. the arc span is three-fourth of circle, shown in figure).

As described above, when the screw is requested to be engaged by larger driving torque, the types of slot, cross, cross-square combination, square and double-cross of the drive bit of the conventional screw driver bit and the screw driver bit 7 of the present invention can be used to and fully engage with the drive recess 4 of the screw. Thus, the loose engagement (the drive bit wobbles excessively within the drive recess) can be substantially decreased, and the driving torque of engagement can be substantially increased and transferred to a body of the screw, thereby economizing effort to drive the screw and controlling the screw to be locked, and further increasing the locking effect and efficiency of screw. Compared with the driving torque of engagement resulted from the conventional drive recesses shown in FIGS. 1, 2, 3, 4 and 5, the driving torque of the present invention can be increased to be at least more than 30 % and transferred to the body of the screw by experiment. Accordingly, the present invention really has inventive step.

Although the invention has been explained in relation to its preferred embodiment, it is not used to limit the invention. It is to be understood that many other possible modifications and variations can be made by those skilled in the art without departing from the scope of the invention as hereinafter claimed.

## Claims

1. A screw comprising a head, a shank and a thread, wherein the head is provided with a drive recess, **characterized in that**:
the drive recess includes four symmetrical arc-shaped grooves and a square groove formed at a center of the arc-shaped grooves.

2. The screw as claimed in claim 1, wherein an included angle between groove wall of the arc-shaped groove and central line of the screw and/or an included angle between groove wall of the arc-shaped groove and central line of the screw is between 0 and 45 degrees

3. The screw as claimed in claim 1, wherein the arc-shaped groove is a part of circle-shaped groove or wherein the arc-shaped groove is a part of oval-shaped groove.

4. The screw as claimed in claim 1, wherein the arc-shaped groove is a part of circle-shaped groove and wherein the arc-shaped groove has an arc span which is at least more than a half circle, preferably a three-fourth of circle.

5. A punch for forging a head of a screw, **characterized in that**:
the punch has a bit portion corresponding to a drive recess of the head of the screw as claimed in any of the claims 1 to 4 and comprising four symmetrical arc-shaped protrusions and a square protrusion formed at a center of the arc-shaped protrusions.

6. A screw driver bit, **characterized in that**:
the punch has a drive bit corresponding to a drive recess of the screw head as claimed in any of the claims 1 to 4 and comprising four symmetrical arc-shaped protrusions and a square protrusion formed at a center of the arc-shaped protrusions.
